# EUROPÄISCHE PATENTSCHRIFT

(11) **EP 1 323 525 B1**
(45) Veröffentlichungstag und Bekanntmachung des Hinweises auf die Patenterteilung: **19.07.2006**
(21) Anmeldenummer: 02026047.7
(22) Anmeldetag: 22.11.2002
(51) Int. Cl.: B32B 37/00, B32B 38/10, B32B 7/02, B32B 7/04, A47B 96/20, A47B 13/08

(54) **Verfahren zur Herstellung eines plattenförmigen Trägers**
Process for manufacturing a plate-shaped support
Procédé de fabrication de supports plats

(30) Priorität: 21.12.2001 DE 10163634
(43) Veröffentlichungstag der Anmeldung: 02.07.2003
(73) Patentinhaber: Heinrich J. Kesseböhmer KG, 49152 Bad Essen (DE)
(72) Erfinder: Fregin, Mark, 23626 Ratekau (DE)
(74) Vertreter: Kohl, Karl-Heinz

(56) Entgegenhaltungen:
- DE-A- 19 917 965
- US-A1- 2001 051 230
- PATENT ABSTRACTS OF JAPAN Bd. 1995, Nr. 10, 30. November 1995 (1995-11-30) & JP 7 186164 A (SHIN ETSU CHEM CO LTD), 25. Juli 1995 (1995-07-25)

## Beschreibung

Die Erfindung betrifft ein Verfahren zur Herstellung eines plattenförmigen Trägers nach dem Oberbegriff des Anspruches 1.

Im Möbelbereich werden häufig Platten eingesetzt, die eine rutschfeste Oberseite haben, damit auf ihr abgestellte Gegenstände nicht verrutschen. Häufig werden solche Platten in beweglichen Möbelteilen eingesetzt, wie beispielsweise in Schubladen, in Eckschränken als Ablagen und dergleichen. Um eine rutschfeste Oberfläche zu erzielen, werden hierfür lösungsmittelhaltige Zweikomponenten-Polyurethan-Lacke im Spritz- bzw. Gießverfahren auf den plattenförmigen Träger aufgebracht.

Der Erfindung liegt die Aufgabe zugrunde, das gattungsgemäße Verfahren so auszubilden, daß auf einfache und kostengünstige Weise eine dauerhafte und haltbare Antirutschschicht auf dem Träger hergestellt werden kann.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird die Antirutschschicht nicht unmittelbar auf dem Träger aufgebracht, sondern durch Vermittlung einer Haftschicht, die zunächst auf den Träger aufgetragen wird. Für die Antirutschschicht wird ein Material eingesetzt, das durch Bestrahlung ausgehärtet werden kann. Bevor die Bestrahlung der Antirutschschicht vorgenommen wird, wird auf sie eine für diese Strahlen durchlässige Folie aufgebracht, durch welche anschließend die von einer Strahlungsquelle ausgehenden Strahlen hindurchtreten und dafür sorgen, daß die Antirutschschicht aushärtet. Die Folie kann unterschiedliche Strukturen haben, die sich auf die Antirutschschicht übertragen. Ist die Antirutschschicht vollständig ausgehärtet, kann die Folie abgezogen werden. Die ausgehärtete Antirutschschicht bildet dann die Oberseite des Trägers, die je nach eingesetzter Folie eine gewünschte Oberflächenstruktur haben kann. Die Folie läßt sich nach dem Aushärten der Antirutschschicht mühelos entfernen. Mit dem erfindungsgemäßen Verfahren läßt sich die Antirutschschicht sehr einfach und kostengünstig auf den Träger aufbringen.

Vorteilhaft wird die Haftschicht durch eine Walze aufgetragen. Nach dem Auftrag wird die Haftschicht so lange bestrahlt, daß sie auszuhärten beginnt, aber nur teilweise ausgehärtet wird.

Die Haftschicht hat hierbei noch ausreichende Haftfähigkeit, so daß auf sie die Antirutschschicht aufgebracht werden kann. Sie ist vorteilhaft ein Antirutschlack, der vorteilhaft transparent ist. Die Antirutschschicht besteht aus einem Material, das durch Bestrahlung aushärtet. Vorteilhaft wird hierfür UV-Strahlung eingesetzt, obgleich auch eine Elektronenbestrahlung zum Aushärten der Antirutschschicht möglich ist.

Da die Haftschicht und die Antirutschschicht durch Bestrahlung aushärten, können lösungsmittelfreie Stoffe für die Haftschicht und die Antirutschschicht verwendet werden.

Die eingesetzten Folien werden durch die Bestrahlung zum Aushärten der Antirutschschicht nicht zersetzt und gehen auch keine chemischen Reaktionen mit der Antirutschschicht ein. Für diesen Fall hat sich eine Polypropylenfolie als besonders hervorragend geeignet herausgestellt.

Weitere Merkmale der Erfindung ergeben sich aus den weiteren Ansprüchen und der Beschreibung.

Es sind beispielsweise Eckschränke für Küchenmöbel bekannt, in denen eine Dreheinrichtung gelagert ist, die mit Abstand übereinander angeordnete Tablare aufweist, auf denen Gegenstände innerhalb des Eckschrankes abgestellt werden können. Da diese Tablare gedreht werden, verrutschen die auf ihnen abgestellten Gegenstände häufig.

Mit dem im folgenden beschriebenen Verfahren werden plattenförmige Träger hergestellt, die eine rutschfeste Oberfläche haben und beispielsweise für Tablare bzw. Ablagen in Eckschränken, Auszüge, Schubkästen und dergleichen, eingesetzt werden können. Diese Träger können darüber hinaus überall dort im Möbelbereich eingesetzt werden, wo es auf eine rutschfeste Oberseite ankommt.

Der plattenförmige Träger kann aus jedem geeigneten Material bestehen, wie eine melaninharzbeschichtete Spanplatte, eine rohe oder beschichtete Holzplatte, eine Glasplatte, eine Keramikplatte und dergleichen. Dieser Träger wird zunächst gereinigt bzw. entstaubt, bevor eine Haftschicht auf die Platte aufgebracht wird. Für die Haftschicht wird ein herkömmlicher Primer verwendet, der Oligomere, Monomere und Photoinitiatoren aufweist. Bei den eingesetzten Oligomeren handelt es sich um aliphatische Urethanacrylate, Polyesteracrylate und Polyetheracrylate. Bei den Monomeren handelt es sich um di- bzw. trifunktionelle strahlenhärtbare Acrylatverdünner. Um die Härtung, insbesondere eine UV-Härtung, auszulösen, werden Photoinitiatoren auf der Basis von Benzophenon, α-Aminoketonen und α-Hydroxyketonen eingesetzt. Im Hinblick auf die nachfolgende Verarbeitung wird für die Haftschicht ein Material verwendet, das mittels UV-Licht oder auch mittels Elektronenstrahlen ausgehärtet werden kann.

Vorteilhaft wird die Haftschicht mit einer Walze aufgebracht, die eine glatte oder auch profilierte Mantelfläche haben kann. Im letzten Fall ist die Mantelfläche der Walze mit Rillen versehen, so daß die Haftschicht beim Auftrag auf den Träger rillenartige Vertiefungen aufweist. Als Walze wird vorteilhaft eine Hartgummiwalze eingesetzt. Zum Auftrag der Haftschicht kann auch eine sogenannte Softwalze eingesetzt werden, deren Mantelfläche nachgiebig ist.

Nach dem Auftrag wird die Haftschicht, je nach eingesetztem Material, kurzzeitig mit UV-Licht oder mit Elektronenstrahlen behandelt. Die Strahlenquelle wird hierbei mit geringer Geschwindigkeit und mit geringer Strahlungsleistung längs des Trägers bewegt. Es ist auch möglich, den mit der Haftschicht versehenen Träger unterhalb der Strahlungsquelle zu bewegen.

Die Geschwindigkeit und die Strahlungsleistung wird so eingestellt, daß die Haftschicht nicht vollständig aushärtet, sondern nur "angeliert", d.h. nur so weit aushärtet, daß sie auf dem Träger nicht verläuft. Die Verfahrgeschwindigkeit des Trägers und/oder der Strahlungsquelle kann zwischen etwa 5 m/min und 20 m/min liegen, vorzugsweise in einem Bereich zwischen 4 m/min und 6 m/min. Insbesondere kann die Geschwindigkeit bei etwa 5 m/min liegen. Diese Geschwindigkeit hängt von der Strahlungsleistung der eingesetzten Strahlenquelle ab. Bei einer UV-Strahlenquelle kann die Strahlleistung beispielsweise zwischen etwa 80 W/cm und 200 W/cm, vorzugsweise in einem Bereich zwischen 110 W/cm und 130 W/cm, liegen. Ein bevorzugter Wert liegt bei etwa 120 W/cm bei einer Geschwindigkeit von etwa 5 m/min.

Die Haftschicht wird nur so dick aufgetragen, daß auf ihr ein Antirutschlack ausreichend fest haftet, der in einem nächsten Verfahrensschritt aufgebracht wird. Für den Auftrag der Haftschicht reicht eine Menge von etwa 8 g/m² bis 12g/m² aus. Ein bevorzugter Bereich liegt zwischen 9 und 11 g/m². Der Antirutschlack weist wie der Primer Oligomere, Monomere und Photoinitiatoren auf. Bei den eingesetzten Oligomeren handelt es sich um aliphatische Urethanacrylate, Polyesteracrylate und Polyetheracrylate. Bei den Monomeren handelt es sich um di- bzw. trifunktionelle strahlenhärtbare Acrylatverdünner. Um die Härtung, insbesondere eine UV-Härtung, auszulösen, werden Photoinitiatoren auf Basis von Benzophenon, α-Aminoketonen und α-Hydroxyketonen eingesetzt.

Der Antirutschlack wird mittels einer Walze auf die teilweise gehärtete Haftschicht aufgetragen. Der Walzenmantel kann eine glatte oder profilierte Mantelfläche haben. Im letzten Fall ist die Mantelfläche über ihre Länge mit Rillen versehen, so daß die aufgetragene Antirutschschicht entsprechend gerillt ist. Die Walze hat einen harten Mantel, kann aber auch beispielsweise eine Softwalze sein, die mit einem nachgiebigen Mantel versehen ist.

Je nach Art des Antirutschlackes wird er in einer Menge von etwa 40 bis 80 g/m² aufgetragen, vorzugsweise in einer Menge von etwa 50 bis 70 g/m². Im Ausführungsbeispiel wird der Antirutschlack mit einer Menge von etwa 60 g/m² mit einer gerillten Walze auf die teilweise gehärtete Haftschicht aufgetragen.

Auch der Antirutschlack besteht aus einem Material, das unter dem Einfluß von UV- oder Elektronenstrahlung aushärtet.

Nach dem Auftrag des Antirutschlackes wird eine Polypropylenfolie aufkaschiert, die vorteilhaft eine seidenglänzende Struktur hat. Sie kann selbstverständlich je nach Anwendungsfall auch jede andere geeignete Struktur haben. Die Polypropylenfolie wird vorteilhaft dort eingesetzt, wo die Aushärtung der Haftschicht und des Antirutschlakkes durch UV-Strahlung erfolgt. Diese UV-Strahlung wird nur in sehr geringem Maße von der aufkaschierten Polypropylenfolie absorbiert. Der größte Anteil der UV-Strahlung geht durch die Polypropylenfolie hindurch und steht zum Aushärten des Antirutschlackes sowie auch der Haftschicht zur Verfügung. Durch den Einsatz einer Polypropylenfolie ist nur eine geringe Strahlungsleistung für die UV-Strahlquelle notwendig.

Anstelle der Polypropylenfolie können beispielsweise auch Polyesteroder Polyurethanfolien eingesetzt werden. Die UV-Strahlungsquelle muß in diesem Fall an das Material dieser Folien angepaßt werden, insbesondere muß die Strahlungsleistung auf diese Folien abgestimmt werden.

Bei Einsatz einer Polypropylenfolie und einer UV-Strahlenquelle kann der Antirutschlack mit einer Strahlungsleistung von etwa 100 bis 140 W/cm bei einer Geschwindigkeit von etwa 3 bis 8 m/min ausgehärtet werden. Vorteilhaft liegt in diesem Falle die Strahlungsleistung zwischen etwa 110 und 130 W/cm, insbesondere bei etwa 120 W/cm bei einer Geschwindigkeit von vorteilhaft 4 bis 6 m/min, insbesondere bei etwa 5 m/min. Für den Aushärtevorgang wird entweder die Strahlungsquelle oder der Träger mit der aufgebrachten Polypropylenfolie mit der angegebenen Geschwindigkeit bewegt.

Bei den angegebenen Strahlungsleistungen und Geschwindigkeiten reicht es aus, daß die UV-Strahlquelle oder der Träger mit der aufkaschierten Polypropylenfolie zweimal mit den angegebenen Geschwindigkeiten und Strahlungsleistungen behandelt wird. Selbstverständlich können auch andere Strahlungsleistungen und/oder Geschwindigkeiten verwendet werden.

Nach dem Aushärten des Antirutschlackes wird die aufkaschierte Folie entfernt. Sie läßt sich mühelos abziehen.

Der Antirutschlack weist entsprechend der Walzenstruktur eine entsprechende Oberseite auf, die optimale Antirutsch-Eigenschaften aufweist. Der so behandelte Träger kann zur Herstellung von Ablagen für Eckschränke, Auszüge, Regale, Einlagen in Schubladen, für Böden in Schränken und dergleichen eingesetzt werden.

## Patentansprüche

1. Verfahren zur Herstellung eines plattenförmigen Trägers, der wenigstens an einer Seite mit einer Antirutschschicht versehen ist, die über eine Haftschicht auf dem Träger befestigt und durch Bestrahlung ausgehärtet wird,
**dadurch gekennzeichnet, daß** die Haftschicht vor dem Aufbringen der Antirutschschicht so lange bestrahlt wird, daß die Haftschicht nur teilweise ausgehärtet wird, und daß vor der Bestrahlung der Antirutschschicht eine strahlungsdurchlässige Folie aufgebracht wird, die nach dem Aushärten der Antirutschschicht entfernt wird.

2. Verfahren nach Anspruch 1,
**dadurch gekennzeichnet, daß** die Haftschicht mittels wenigstens einer Walze auf den Träger aufgetragen wird.

3. Verfahren nach Anspruch 1 oder 2,
**dadurch gekennzeichnet, daß** die Haftschicht durch die Bestrahlung ausgehärtet wird.

4. Verfahren nach einem der Ansprüche 1 bis 3,
**dadurch gekennzeichnet, daß** die Haftschicht einer UV-Strahlung ausgesetzt wird.

5. Verfahren nach einem der Ansprüche 1 bis 3,
**dadurch gekennzeichnet, daß** die Haftschicht einer Elektronenstrahlung ausgesetzt wird.

6. Verfahren nach einem der Ansprüche 1 bis 5,
**dadurch gekennzeichnet, daß** für die Antirutschschicht ein Antirutschlack verwendet wird, der unter der Bestrahlung aushärtet.

7. Verfahren nach einem der Ansprüche 1 bis 6,
**dadurch gekennzeichnet, daß** die Antirutschschicht mittels wenigstens einer Walze auf die teilweise ausgehärtete Haftschicht aufgetragen wird.

8. Verfahren nach Anspruch 7,
**dadurch gekennzeichnet, daß** die Walze einen glatten Mantel hat.

9. Verfahren nach Anspruch 7,
**dadurch gekennzeichnet, daß** die Walze eine strukturierte Mantelfläche hat.

10. Verfahren nach Anspruch 9,
**dadurch gekennzeichnet, daß** der Walzenmantel über seine Länge gerillt ist.

11. Verfahren nach einem der Ansprüche 1 bis 10,
**dadurch gekennzeichnet, daß** als Folie eine Polypropylenfolie verwendet wird.

12. Verfahren nach einem der Ansprüche 1 bis 10,
**dadurch gekennzeichnet, daß** als Folie eine Polyethylenfolie verwendet wird.

13. Verfahren nach einem der Ansprüche 1 bis 10,
**dadurch gekennzeichnet, daß** als Folie eine Polyurethanfolie verwendet wird.

14. Verfahren nach einem der Ansprüche 1 bis 10,
**dadurch gekennzeichnet, daß** als Folie eine Polyesterfolie verwendet wird.

## Claims

1. Process for manufacturing of a plate-shaped support which is provided at least at one side with an antigliss layer fixed to the support via an undercoating and cured by irradiation,
**characterised in that** the undercoating is exposed to radiation before coating of the antigliss layer so long that the undercoating is cured only partly and that before the exposure of the antigliss layer to radiation a film pervious to radiation is coated which is removed after curing of the antigliss layer.

2. Process according to claim 1,
**characterised in that** the undercoating is applied to the support by means of at least one roller.

3. Process according to claim 1 or 2,
**characterised in that** the undercoating is cured by the irradiation.

4. Process according to one of the claims 1 to 3,
**characterised in that** the undercoating is exposed to ultraviolet irradiation.

5. Process according to one of the claims 1 to 3,
**characterised in that** the undercoating is exposed to electron beaming.

6. Process according to one of the claims 1 to 5,
**characterised in that** for the antigliss layer an antigliss varnish is used which cures under irradiation.

7. Process according to one of the claims 1 to 6,
**characterised in that** the antigliss layer is put on the partly cured undercoating by means of at least one roller.

8. Process according to claim 7,
**characterised in that** the roller comprises a smooth shell.

9. Process according to claim 7,
**characterised in that** the roller comprises a structured generated surface.

10. Process according to claim 9,
**characterised in that** the roller shell of the roller is grooved along its length.

11. Process according to one of the claims 1 to 10,
**characterised in that** the film, which is used, is a polypropylene film.

12. Process according to one of the claims 1 to 10,
**characterised in that** the film, which is used, is a polyethylene film.

13. Process according to one of the claims 1 to 10,
**characterised in that** the film, which is used, is a polyurethane film.

14. Process according to one of the claims 1 to 10,
**characterised in that** the film, which is used, is a polyester film.

## Revendications

1. Procédé de fabrication d'un support plat lequel est muni au moins sur une face d'une couche antiglisse laquelle est fixée au moyen d'une couche adhésive sur le support et est cuit par irradiation,
**caractérisé en ce que** la couche adhésive, avant l'épandage de la couche antiglisse, est irradiée aussi longtemps que la couche adhésive est cuite seulement partiellement et que avant l'irradiation de la couche antiglisse un film rodioperméable est appliqué, lequel est enlevé après le pontage de la couche antiglisse.

2. Procédé selon revendication 1,
**caractérisé en ce que** la couche adhésive est appliquée sur le support à l'aide d'au moins un cylindre.

3. Procédé selon une des revendications 1 ou 2,
**caractérisé en ce que** la couche adhésive est cuite par l'irradiation.

4. Procédé selon une des revendications 1 à 3,
**caractérisé en ce que** la couche adhésive est exposée à une irradiation ultraviolette.

5. Procédé selon une des revendications 1 à 3,
**caractérisé en ce que** la couche adhésive est exposée à un faisceau électronique.

6. Procédé selon une des revendications 1 à 5,
**caractérisé en ce que** pour la couche antiglisse une laque antiglisse est utilisée laquelle cuite sous irradiation.

7. Procédé selon une des revendications 1 à 6,
**caractérisé en ce que** la couche antiglisse est appliquée à l'aide d'au moins un cylindre sur la couche adhésive partiellement cuite.

8. Procédé selon revendication 7,
**caractérisé en ce que** le cylindre a une chemise lisse.

9. Procédé selon revendication 7,
**caractérisé en ce que** le cylindre a une nappe de corps structurée.

10. Procédé selon revendication 9,
**caractérisé en ce que** la nappe de cylindre est cannelée sur sa longueur.

11. Procédé selon une des revendications 1 à 10,
**caractérisé en ce que**, comme film, un film de polypropylène est utilisé.

12. Procédé selon une des revendications 1 à 10,
**caractérisé en ce que**, comme film, un film de polyéthylène est utilisé.

13. Procédé selon une des revendications 1 à 10,
**caractérisé en ce que**, comme film, film de polyuréthane est utilisé un.

14. Procédé selon une des revendications 1 à 10,
**caractérisé en ce, que** comme film, un film de polyester est utilisé.
